(19) **Europäisches Patentamt**
**European Patent Office**
**Office européen des brevets**

(11) **EP 3 152 092 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(51) Int Cl.:
***B60W 30/095*** *(2012.01)*

(21) Anmeldenummer: **15719615.5**

(22) Anmeldetag: **24.04.2015**

(86) Internationale Anmeldenummer:
**PCT/EP2015/000847**

(87) Internationale Veröffentlichungsnummer:
**WO 2015/185175 (10.12.2015 Gazette 2015/49)**

(54) **VERFAHREN ZUM BETRIEB EINES FAHRERASSISTENZSYSTEMS ZUR AUTOMATISIERTEN FÜHRUNG EINES KRAFTFAHRZEUGS SOWIE ZUGEORDNETES KRAFTFAHRZEUG**

METHOD FOR OPERATING A DRIVER ASSISTANCE SYSTEM FOR AUTOMATICALLY GUIDING A MOTOR VEHICLE, AND PAIRED MOTOR VEHICLE

PROCÉDÉ POUR FAIRE FONCTIONNER UN SYSTÈME D'ASSISTANCE AU CONDUCTEUR POUR LA GESTION AUTOMATISÉE D'UN VÉHICULE AUTOMOBILE ET VÉHICULE AUTOMOBILE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2014 DE 102014008353**

(43) Veröffentlichungstag der Anmeldung:
**12.04.2017 Patentblatt 2017/15**

(73) Patentinhaber: **Audi AG**
**85045 Ingolstadt (DE)**

(72) Erfinder:
• **REICHEL, Michael**
**85049 Ingolstadt (DE)**
• **RÖSENER, Christian**
**32479 Hille (DE)**

(74) Vertreter: **Herbst, Matthias Heinz**
**Audi AG**
**Patentabteilung**
**I/EZ-14**
**85045 Ingolstadt (DE)**

(56) Entgegenhaltungen:
WO-A1-2008/031662     DE-A1-102010 062 350
DE-A1-102012 005 867     DE-A1-102012 215 562

**Beschreibung**

Die Erfindung betrifft ein Verfahren zum Betrieb eines Fahrerassistenzsystems zur automatisierten Führung eines Kraftfahrzeugs.

Verfahren zur automatisierten, insbesondere hochautomatisierten, Führung von Kraftfahrzeugen lassen sich in drei Phasen unterteilen. Zunächst erfolgt eine Wahrnehmungsphase, das heißt eine Erfassung von für die Planung von zukünftigen Fahrmanövern relevanten Informationen. Anhand dieser Informationen wird in einer zweiten Phase, der Verhaltensplanungs- und Entscheidungsphase, eine Bahn- bzw. Trajektorienplanung durchgeführt. In einer dritten Phase erfolgt eine Verhaltensumsetzung, wobei Fahrzeugsysteme angesteuert werden, um die zuvor geplante Bahn bzw. Trajektorie umzusetzen.

Sensoren der Fahrzeugsensorik weisen eine eingeschränkte Reichweite und einen eingeschränkten Öffnungswinkel auf. Somit ist es möglich, dass in der Wahrnehmungsphase der Bereiche des Umfelds, die für eine Bahn- bzw. Trajektorienplanung relevant wären, nicht durch die Fahrzeugsensorik erfasst werden und somit auch nicht bei der Bahn- bzw. Trajektorienplanung berücksichtigt werden können.

Ein Verfahren zur Vermeidung bzw. zur Folgenminderung von Kollisionen eines Fahrzeugs mit mindestens einem Objekt ist aus der Druckschrift WO 2008/031662 A1 bekannt. Hierbei kann eine Schar von Ausweichtrajektorien ermittelt und hieraus eine Ausweichtrajektorie ausgewählt werden. Bei der Schar von potentiell möglichen Ausweichtrajektorien handelt es sich um einen sogenannten Trajektorienschlauch, der die Gesamtheit aller möglichen Bewegungen des Fahrzeugs wiedergibt. Überschneidungen und Überlappungen zwischen dem Trajektorienschlauch des Fahrzeugs und eines Fremdobjekts werden bestimmt und für die Auswahl der Ausweichtrajektorien eliminiert. Aus dem verbleibenden Bereich des Trajektorienschlauches wird mittels einer Optimierungsfunktion eine Ausweichtrajektorie gewählt.

Aus der Druckschrift DE 10 2011 002 911 A1 ist ein Verfahren zum Führen eines Fahrzeugs in einer Fahrspur bekannt, wobei das Fahrzeug durch automatische Lenkeingriffe in der Fahrspur geführt wird. Um den Fahrer rechtzeitig vor einem Ausfall des Spurhaltesystems zu warnen, wird vorgeschlagen, Daten über einen vorausliegenden Streckenabschnitt auszuwerten und daraus zu ermitteln, ob eine vorgegebene Systemgrenze beim Durchfahren des Streckenabschnitts überschritten wird. Eine Systemgrenze kann sich beispielsweise aus der technischen Leistungsfähigkeit von verwendeten Systemkomponenten ergeben. So können z. B. in sehr engen Kurven aufgrund des begrenzten horizontalen Winkelerfassungsbereichs einer Videosensorik Spurmarkierungen auf der Straße nicht mehr erfasst werden. Wird eine mögliche Überschreitung einer vorgegebenen Systemgrenze festgestellt, so wird ein Signal an den Fahrer ausgegeben, das den Fahrer vor einem bevorstehenden Ausfall des Spurhaltesystems warnt und ihn auffordert, die Kontrolle über das Lenkrad zu übernehmen.

Die Druckschrift DE 10 2012 007 127 A1 betrifft ein Verfahren zum Bestimmen einer Bewegungsbahn für ein Fahrzeug. In diesem werden eine Fahrbahnbegrenzung und mehrere mögliche Bewegungsbahnen für das Fahrzeug bestimmt. In Abhängigkeit von Abstandsgrößenflächen wird eine Bewegungsbahn aus den mehreren möglichen Bewegungsbahnen ausgewählt.

Die Druckschrift US 2008/0 065 328 A1 offenbart ein Verfahren zur Kollisionsvermeidung für ein Fahrzeug. Daten, die einen Satz von fahrzeugexternen Objekten betreffen, werden durch Sensoren des Kraftfahrzeugs erfasst. Diese Daten umfassen jeweils eine Objektposition und eine Objektgeschwindigkeit. Für die externen Objekte werden voraussichtliche Trajektorien prognostiziert. Diese können zur Voraussage potenzieller Konflikte und zur Einleitung von Steuereingriffen genutzt werden.

Der Erfindung liegt somit die Aufgabe zugrunde, ein Verfahren zum Betrieb eines Fahrerassistenzsystems zur automatisierten Führung eines Kraftfahrzeugs anzugeben, das demgegenüber bezüglich der Erfassung von relevanten Umfeldbereichen während eines automatisierten Fahrbetriebs verbessert ist.

Die Aufgabe wird erfindungsgemäß durch ein Verfahren der eingangs genannten Art gelöst, das die folgenden Schritte umfasst:

- Erfassen von das Umfeld des Kraftfahrzeugs betreffenden Umfelddaten durch Umfeldsensoren des Kraftfahrzeugs und von das Kraftfahrzeug betreffenden Egodaten,
- Bestimmen mehrerer Trajektorien, die jeweils eine mögliche zukünftige Bewegung des Kraftfahrzeugs beschreiben, in Abhängigkeit der Umfelddaten und der Egodaten,
- Auswählen einer Solltrajektorie aus den bestimmten Trajektorien durch Auswertung von mehreren Bewertungskriterien, wobei wenigstens eines der Bewertungskriterien ein Erfassungsbereichskriterium ist, das wenigstens einen prognostizierten Erfassungsbereich eines der Umfeldsensoren oder einer Gruppe der Umfeldsensoren des Kraftfahrzeugs während einer prognostizierten Bewegung des Kraftfahrzeugs entlang der jeweiligen bestimmten Trajektorie auswertet,
- Ansteuern von Fahrzeugsystemen zur Bewegung des Kraftfahrzeugs entlang der Solltrajektorie.

Erfindungsgemäß wird vorgeschlagen, die Solltrajektorie, auf der das Kraftfahrzeug während einer automatisierten Führung geführt wird, derart auszuwählen, dass wenigstens ein Erfassungsbereich eines der Umfeldsensoren oder einer Gruppe der Umfeldsensoren während der prognostizierten Bewegung des Kraftfahrzeugs entlang der Solltrajektorie berücksichtigt wird. Zusätzlich zu den üblicherweise im Rahmen der Bestimmung einer Solltrajektorie ausgewerteten Bewertungskriterien, die beispielsweise fahrdynamische Parameter des Kraftfahrzeugs, den Abstand des Kraftfahrzeugs zu weiteren Objekten und Ähnliches berücksichtigen, die jeweils für eine der Trajektorien prognostiziert werden, sollen zusätzlich prognostizierte Erfassungsbereiche von Sensoren bzw. Sensorgruppen berücksichtigt werden. Mit diesem Vorgehen kann die Solltrajektorie derart gewählt werden, dass als relevant erkannte Umfeldbereiche während der Bewegung des Kraftfahrzeugs entlang der Solltrajektorie zuverlässig erfasst werden.

Das erfindungsgemäße Verfahren ist insbesondere bei einer hoch- bzw. vollautomatisierten Führung des Kraftfahrzeugs durch das Fahrerassistenzsystem nutzbar. Auch ein Fahrerassistenzsystem zur teilautomatisierten Führung des Kraftfahrzeugs kann das erfindungsgemäße Verfahren jedoch vorteilhaft nutzen. Die Klassifizierung der Automatisierungsgrade orientiert sich dabei an der Publikation der Bundesanstalt für Straßenwesen "Forschung Kompakt 11/2012 - Rechtsfolgen zunehmender Fahrzeugautomatisierung". Gemäß dieser Publikation übernimmt das Fahrerassistenzsystem bei einer vollautomatisierten Fahrt die Quer- und Längsführung vollständig in einem definierten Anwendungsfall. Der Fahrer muss das System dabei nicht überwachen. Bei einer hochautomatisierten Fahrt übernimmt das Fahrerassistenzsystem die Quer- und Längsführung für einen gewissen Zeitraum in spezifischen Situationen. Auch in diesem Fall muss der Fahrer das System nicht überwachen. Bei Bedarf wird der Fahrer zur Übernahme der Fahraufgaben mit ausreichender Zeitreserve aufgefordert. Bei einer teilautomatisierten Fahrt übernimmt das Fahrerassistenzsystem die Quer- und Längsführung für einen gewissen Zeitraum und/oder in spezifischen Situationen. Der Fahrer muss das System dauerhaft überwachen.

Als Umfeldsensoren können im erfindungsgemäßen Verfahren eine Vielzahl von Sensoren, wie beispielsweise Kameras, Ultraschallsensoren oder Radarsensoren genutzt werden. Die Egodaten können durch interne Sensoren des Kraftfahrzeugs erfasst werden. Es ist auch möglich, Steuergrößen, die durch das Fahrerassistenzsystem selbst oder weitere Fahrzeugsysteme bereitgestellt werden, als Egodaten des Kraftfahrzeugs auszuwerten oder Egodaten einer Datenbank, die insbesondere Kartendaten umfasst, zu entnehmen.

Ein Erfassungsbereich eines einzelnen Umfeldsensors kann beispielsweise durch eine maximale Sensorreichweite und einen Öffnungswinkel definiert sein. Zur Ermittlung eines Erfassungsbereichs während der prognostizierten Bewegung des Kraftfahrzeugs entlang einer jeweiligen Trajektorie können insbesondere Koordinatentransfunktionen zwischen umweltfesten, kraftfahrzeugfesten und/oder sensorfesten Koordinatensystemen genutzt werden. Der Erfassungsbereich eines Sensors selbst kann dabei in einem dem Sensor zugeordneten Koordinatensystem angegeben sein. Durch eine bekannte Ausrichtung und einen bekannten Anordnungsort am Kraftfahrzeug ist eine Umrechnung dieses Erfassungsbereichs in ein kraftfahrzeugfestes Koordinatensystem möglich. Das kraftfahrzeugfeste Koordinatensystem kann nach DIN 70000 festgelegt sein. Zur Trajektorienplanung kann es jedoch vorteilhaft sein, stattdessen ein Umfeld-Sensor-Koordinatensystem zu nutzen. Die x-y-Ebene des Umfeld-Sensor-Koordinatensystems kann durch die Aufstandsflächen der Räder auf dem Untergrund definiert sein. Die x-Achse zeigt längs des Fahrzeugs nach vorne. Der Ursprung liegt in der Aufstandsfläche an der Mitte der Hinterachse. Als Rotationswinkel werden Gierwinkel, Nickwinkel und Wankwinkel eines Kraftfahrzeugs berücksichtigt. Dabei kann vorteilhaft der Konfigurationsraum bei der Trajektorienplanung auf das Umfeld-Sensor-Koordinatensystem bezogen sein und erfasste Umfelddaten können zur Trajektorienplanung in das Umfeld-Sensor-Koordinatensystem transformiert werden.

Um beispielsweise zu ermitteln, ob eine Position während einer Bewegung des Kraftfahrzeugs entlang einer Trajektorie im Erfassungsbereich eines Umfeldsensors liegt, kann die zu prüfende Position zunächst im aktuellen Umfeld-Sensor-Koordinatensystem beschrieben werden. Durch eine Koordinatentransformation, beispielsweise durch Anwenden einer entsprechenden Rotationsmatrix und einer Translation, können die Koordinaten der Position in ein prognostiziertes Umfeld-Sensor-Koordinatensystem für einen Aufenthalt des Kraftfahrzeugs an einem auf der Trajektorie liegenden Trajektorienpunkt übertragen werden. Durch eine zweite Koordinatentransformation können die Koordinaten der Position anschließend in ein prognostiziertes Sensor-Koordinatensystem übertragen werden und, beispielsweise durch einen Vergleich der Punktkoordinaten mit einem Öffnungswinkel des Sensors und einer Reichweite des Sensors, bestimmt werden, ob der jeweilige Punkt im Erfassungsbereich des Sensors liegt.

Vorteilhaft kann vor Auswahl der Solltrajektorie wenigstens ein relevantes Umgebungselement in der Umgebung des Kraftfahrzeugs ermittelt werden, wobei das Erfassungskriterium dahingehend ausgewertet wird, inwieweit sich das relevante Umgebungselement während der jeweiligen prognostizierten Bewegung im prognostizierten Erfassungsbereich befindet. Bei dem Umgebungselement kann es sich um ein bezüglich des Umfelds des Kraftfahrzeugorts festes Umgebungselement, beispielsweise eine Kreuzung oder eine Einmündung handeln. Alternativ oder ergänzend können auch bewegte Umgebungselemente, beispielsweise weitere Kraftfahrzeuge oder Fußgänger als relevante Umgebungselemente berücksichtigt werden. Für eine Berücksichtigung bewegter relevanter Umgebungselemente kann für das jeweilige relevante bewegte Umgebungselement eine zukünftige Elementtrajektorie prognostiziert werden. Für die prognostizierte Bewegung des Kraftfahrzeugs entlang einer jeweiligen Trajektorie kann in diesem Fall jeweils bestimmt werden, zu welchem Zeitpunkt ein Trajektorienpunkt erreicht wird, und eine prognostizierte Position des relevanten bewegten Umgebungselements kann in Abhängigkeit der Elementtrajektorie und des Zeitpunktes bestimmt werden.

Die bestimmten Trajektorien für eine mögliche zukünftige Bewegung des Kraftfahrzeugs können insbesondere jeweils mehrere zeitliche beabstandete Trajektorienpunkte umfassen, wobei für jeden der Trajektorienpunkte jeder der bestimmten Trajektorien ein Punkterfassungsbereichskriterium bestimmt wird, wobei für jeden der Trajektorienpunkte ein prognostizierter Erfassungsbereich ermittelt wird, und wobei das Punkterfassungsbereichskriterium jeweils erfüllt wird, wenn sich das relevante Umgebungselement zumindest teilweise in dem jeweiligen prognostizierten Erfassungsbereich befindet. Das Erfassungsbereichskriterium kann erfüllt sein, wenn der Anteil und/oder die Anzahl der Trajektorienpunkte der jeweiligen bestimmten Trajektorie, für die das Punkterfassungsbereichskriterium erfüllt wird, einen vorgegebenen Wert übersteigt oder erreicht. Insbesondere kann das Erfassungsbereichskriterium erfüllt sein, wenn das Punkterfassungsbereichskriterium für alle der Trajektorienpunkte der jeweiligen bestimmten Trajektorie erfüllt ist.

Im erfindungsgemäßen Verfahren kann insbesondere eine der bestimmten Trajektorien als Solltrajektorie ausgewählt werden, für die das Erfassungsbereichskriterium erfüllt wird. Hierzu können insbesondere entweder Trajektorien, für die das Erfassungsbereichskriterium erfüllt ist, oder Trajektorien, für die das Erfassungsbereichskriterium nicht erfüllt ist, durch ein sogenanntes Flag, also durch einen bestimmten Zustand einer Variable, die insbesondere zwei Zustände annehmen kann, markiert werden. Im weiteren Verfahren können nur solche Trajektorien bei der Bestimmung der Solltrajektorie berücksichtigt werden, für die das Flag gesetzt bzw. nicht gesetzt ist.

Alternativ wäre es möglich, dass eine Nichterfüllung des Erfassungsbereichskriteriums nur zu einer Abwertung der jeweiligen Trajektorie, für die es nicht erfüllt ist, gegenüber der Trajektorien, für die es erfüllt ist, führt. Insbesondere kann in Abhängigkeit der verschiedenen Bewertungskriterien zum Auswählen der Solltrajektorie für jede der Trajektorien jeweils ein Wert der Trajektorie bestimmt werden, wobei als Solltrajektorie die Trajektorie mit dem höchsten oder dem niedrigsten Wert ausgewählt wird. Das Erfassungsbereichskriterium kann bei der Bestimmung des Werts der jeweiligen Trajektorie beispielsweise derart berücksichtigt werden, dass bei Erfüllung des Erfassungsbereichskriteriums jeweils ein vorgegebener Wert zum Wert der Trajektorie addiert wird. Selbstverständlich sind auch komplexere Verknüpfungen mehrerer Bewertungskriterien zur Auswahl der Solltrajektorie möglich. So können beispielsweise wenigstens zwei Erfassungsbereichskriterien für jeweils einen Umfeldsensor oder eine Gruppe von Umfeldsensoren bestimmt werden und es können nur solche Trajektorien von der Auswahl der Solltrajektorie ausgeschlossen werden, für die beide Erfassungsbereichskriterien nicht erfüllt sind.

Die bestimmten Trajektorien können jeweils mehrere zeitlich beabstandete Trajektorienpunkte umfassen, wobei für jeden der Trajektorienpunkte für wenigstens eines der Bewertungskriterien jeweils ein Punktbewertungskriterium ausgewertet wird, um eine Punktbewertung zu bestimmen, wobei das Punktbewertungskriterium die der jeweiligen bestimmten Trajektorie zugeordneten Punktbewertungskriterien auswertet. Es erfolgt somit eine Zeitdiskretisierung der prognostizierten Bewegung des Kraftfahrzeugs entlang der jeweiligen bestimmten Trajektorie. Für jeden dieser diskreten Zeitpunkte, also der Trajektorienpunkte, wird separat ein Punktebewertungskriterium ausgewertet, um das entsprechende Bewertungskriterium zu bestimmen.

Des Weiteren betrifft die Erfindung ein Kraftfahrzeug mit einem Fahrerassistenzsystem zur automatisierten Führung des Kraftfahrzeugs, wobei das Kraftfahrzeug zur Durchführung des erfindungsgemäßen Verfahrens ausgebildet ist.

Weitere Vorteile und Einzelheiten der Erfindung zeigen die folgenden Ausführungsbeispiele sowie die zugehörigen Zeichnungen. Dabei zeigen schematisch:

Fig. 1      ein Ablaufdiagramm eines Ausführungsbeispiels des erfindungsgemäßen Verfahrens,

Fig. 2      eine Darstellung mehrerer in einem Ausführungsbeispiel des erfindungsgemäßen Verfahrens bestimmter Trajektorien für ein Kraftfahrzeug,

Fig. 3      einen prognostizierten Erfassungsbereich eines Sensors bei einer Bewegung eines Kraftfahrzeugs entlang einer der in Fig. 2 gezeigten Trajektorien, und

Fig. 4      ein Ausführungsbeispiel eines erfindungsgemäßen Kraftfahrzeugs.

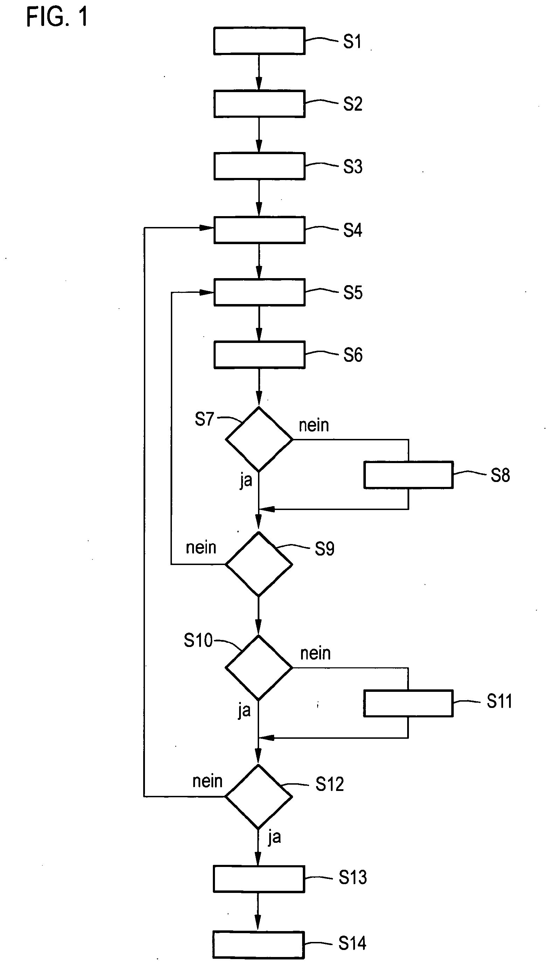

Fig. 1 zeigt schematisch ein Ablaufdiagramm eines Verfahrens zum Betrieb eines Fahrerassistenzsystems zur automatisierten Führung eines Kraftfahrzeugs. In Schritt S1 werden das Umfeld des Kraftfahrzeugs betreffende Umfelddaten durch Umfeldsensoren des Kraftfahrzeugs und des Kraftfahrzeugs selbst betreffende Egodaten durch weitere Sensoren des Kraftfahrzeugs, die Auswertung von Steuergrößen sowie die Auswertung von Datenbanken bestimmt. Um ein Umfeldmodell des Umfelds des Kraftfahrzeugs zu generieren und eine Trajektorienplanung zu ermöglichen, werden durch verschiedene Umfeldsensoren erfasste Umfelddaten in ein gemeinsames Koordinatensystem, das sogenannte Umfeld-Sensor-Koordinatensystem, transformiert. Das Umfeld-Sensor-Koordinatensystem wird zur weiteren Trajektorienplanung genutzt.

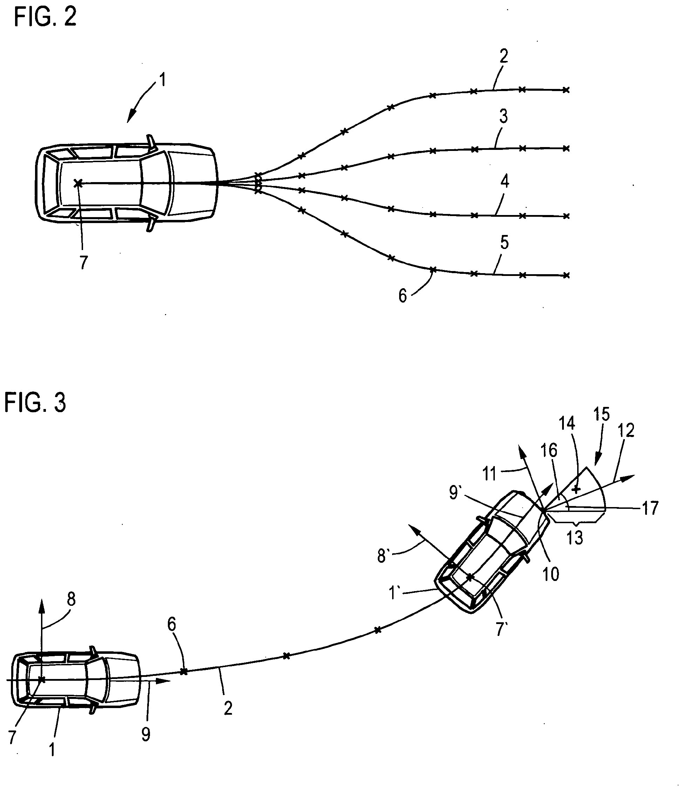

In Abhängigkeit der in Schritt S1 ermittelten Umfeld- und Egodaten werden in Schritt S2 mehrere Trajektorien, die jeweils eine mögliche zukünftige Bewegung des Kraftfahrzeugs beschreiben, bestimmt. Derartige bestimmte Trajektorien 2, 3, 4, 5 sind schematisch in Fig. 2 dargestellt. Ausgehend von dem Kraftfahrzeug 1 sind schematisch vier bestimmte Trajektorien 2, 3, 4, 5 dargestellt, die zukünftige mögliche Bewegungen des Kraftfahrzeugs beschreiben. Aus Übersichtlichkeitsgründen sind nur die vier Trajektorien 2, 3, 4, 5 dargestellt. In typischen Fahrsituationen werden durch das Fahrerassistenzsystem zur automatisierten Führung weit mehr Trajektorien bestimmt. Jede der Trajektorien 2, 3, 4, 5 umfasst zeitlich beabstandete Trajektorienpunkte 6, die eine jeweilige Position des Ursprungs 7 des Umfeld-Sensor-Koordinatensystems und somit des Kraftfahrzeugs 1 beschreiben. Bei der Bestimmung der Trajektorien 2, 3, 4, 5 in Schritt S2 werden neben den Positionen der jeweiligen Trajektorienpunkte 6 im momentanen Umfeld-Sensor-Koordinatensystem für jeden der Trajektorienpunkte 6 auch weitere Informationen über den prognostizierten Zustand des Kraftfahrzeugs 1 ermittelt, insbesondere eine prognostizierte Orientierung des Kraftfahrzeugs 1 in dem jeweiligen Trajektorienpunkt 6.

In Schritt S3 wird aus den in Schritt S1 erfassten Umfelddaten wenigstens ein relevantes Umgebungselement in der Umgebung des Kraftfahrzeugs ermittelt, wobei die Führung des Kraftfahrzeugs so erfolgen soll, dass das Umgebungselement im Erfassungsbereich eines Sensors des Kraftfahrzeugs verbleibt. Bei dem Umgebungselement kann es sich um einen festen Punkt in der Umgebung des Kraftfahrzeugs handeln, der beispielsweise eine Kreuzung oder das Ende einer Fahrspur markiert. Das Umgebungselement kann jedoch auch ein bewegtes Umgebungselement, beispielsweise ein weiteres Kraftfahrzeug oder ein Fußgänger, sein.

Handelt es sich bei dem Umgebungselement um ein bewegtes Umgebungselement, so wird in Schritt S3 zusätzlich eine Bewegungsprognose für das Umgebungselement durchgeführt, wobei für Zeitpunkte, zu denen in Schritt S2 jeweils ein Trajektorienpunkt 6 bestimmt wurde, eine prognostizierte Position des Umgebungselements im momentanen Umfeld-Sensor-Koordinatensystem bestimmt wird.

Ergebnis des Schrittes S3 ist eine feste oder eine zwischen den verschiedenen Trajektorienpunkten 6 variable Koordinate für wenigstens ein relevantes Umgebungselement in dem momentanen Umfeld-Sensor-Koordinatensystem. In den folgenden Schritten soll die Soll-Trajektorie nun so aus den bestimmten Trajektorien 2, 3, 4, 5 ausgewählt werden, dass die entsprechende Koordinate bei einer Bewegung des Kraftfahrzeugs entlang der Solltrajektorie im prognostizierten Erfassungsbereich des Umfeldsensors liegt.

Hierzu wird für jede der Trajektorien 2, 3, 4, 5 in den Schritten S4 - S12 jeweils ein Erfassungskriterium ausgewertet. Die Schritte S4 - S12 werden für jede der im Schritt S2 bestimmten Trajektorien 2, 3, 4, 5 separat durchgeführt. Daher wird in Schritt S4 zunächst für jeden Durchgang eine der bestimmten Trajektorien 2, 3, 4, 5 ausgewählt, für die im Folgenden die Schritte S5 - S12 durchgeführt werden.

Das Erfassungsbereichskriterium wird in Abhängigkeit von Punkterfassungsbereichskriterien bestimmt, die für jeden der Trajektorienpunkte 6 der jeweiligen Trajektorie 2, 3, 4, 5 separat in den Schritten S5 - S9 bestimmt werden.

Hierzu wird in Schritt S5 in jedem Durchgang der Schritte S5 - S9 jeweils einer der Trajektorienpunkte 6 der in Schritt S4 ausgewählten Trajektorie 2, 3, 4, 5 ausgewählt, für den in den folgenden Schritten das Punkterfassungsbereichskriterium bestimmt wird.

Um zu ermitteln, ob die Koordinate des relevanten Umgebungselements in einem prognostizierten Erfassungsbereich des Sensors für den jeweiligen ausgewählten Trajektorienpunkt 6 liegt, wird die Koordinate des relevanten Umgebungselements von dem momentanen Umfeld-Sensor-Koordinatensystem in ein prognostiziertes Sensorkoordinatensystem transformiert. Diese im Folgenden mit Bezug auf Fig. 3 näher erläuterte Transformation verläuft in zwei Stufen, wobei die Koordinate des relevanten Umgebungselements 14 zunächst von dem momentanen Umfeld-Sensor-Koordinatensystem in ein prognostiziertes Umfeld-Sensor-Koordinatensystem und anschließend von dem prognostizierten Umfeld-Sensor-Koordinatensystem in das prognostizierte Sensorkoordinatensystem transformiert wird. Das momentane Umfeld-Sensor-Koordinatensystem hat seinen Ursprung 7 in der Mitte der Hinterachse in der Aufstandsfläche, auf der das Kraftfahrzeug 1 steht. Die x-y-Ebene des Umfeld-Sensor-Koordinatensystems ist durch die Aufstandsfläche der Räder auf dem Untergrund definiert. Die x-Achse 8 verläuft senkrecht zur Fahrtrichtung und die y-Achse 9 verläuft in Fahrtrichtung. Als die in Schritt S4 gewählte Trajektorie wird die Trajektorie 2 der in Fig. 2 dargestellten Trajektorien 2, 3, 4, 5 betrachtet. Entlang der Trajektorie 2 sind mehrere der Trajektorienpunkte 6 gezeigt. Für jeden der Trajektorienpunkte 6 wurde im Rahmen der Tranjektorienberechnungen in Schritt S2 eine Position des Kraftfahrzeugs 1 und eine Ausrichtung des Kraftfahrzeugs, also ein Gierwinkel, bestimmt.

Für den in Schritt S5 ausgewählten Trajektorienpunkt 6 wird entsprechend der prognostizierten Fahrzeugposition 1' ein prognostiziertes Umfeld-Sensor-Koordinatensystem mit dem Ursprung 7' bestimmt. Die x-Achse 8' des prognostizierten Umfeld-Sensor-Koordinatensystems verläuft senkrecht zur prognostizierten Fahrtrichtung des Kraftfahrzeugs im Trajektorienpunkt 6, die Richtung der y-Achse 9' des prognostizierten Umfeld-Sensor-Koordinatensystems verläuft in die prognostizierte Fahrtrichtung. Eine Koordinate eines relevanten Umgebungselements 14 kann, da sowohl die Lage des Ursprungs 7 und die Lage der x- und y-Achse 8, 9 des Umfeld-Sensor-Koordinatensystems als auch die Lage des Ursprungs 7' und der x- und y-Achse 8', 9' des prognostizierten Umfeld-Sensor-Koordinatensystems bekannt sind, durch eine Koordinatentransformation von dem momentanen Umfeld-Sensor-Koordinatensystem in das prognostizierte Umfeld-Sensor-Koordinatensystem transformiert werden. Eine derartige Transformation ist beispielsweise durch das Anwenden einer entsprechenden Rotationsmatrix auf die Koordinaten und eine anschließende Translation möglich.

Anschließend wird die Koordinate des relevanten Umgebungselements 14 in ein Sensorkoordinatensystem transformiert, das seinen Ursprung am Punkt 10 hat und durch die x-Achse 11 und die y-Achse 12 aufgespannt ist. Die relative Lage des prognostizierten Sensorkoordinatensystems zum prognostizierten Umfeld-Sensor-Koordinatensystem ist ausschließlich von der relativen Lagen und Ausrichtung des Sensors in dem Kraftfahrzeug 1 abhängig.

Nach den Koordinatentransformationen liegen in Schritt S7 die Koordinaten des relevanten Umgebungselements im prognostizierten Sensorkoordinatensystem vor. Daher kann in Schritt S7 besonders einfach bestimmt werden, ob die Koordinaten des relevanten Umgebungselements 14 innerhalb eines Erfassungsbereichs 15 des Sensors liegen. Ein Erfassungsbereich eines Sensors kann für die meisten Sensoren durch zwei begrenzende Winkel des Öffnungswinkels $\alpha_{Start}$, 16, $\alpha_{Ende}$ 17 und durch eine maximale Sensorreichweite R 13 beschrieben werden. Die Koordinaten des relevanten Umgebungselements 14 liegen genau dann innerhalb des Erfassungsbereiches des Sensors, wenn zum einen gilt:

$$R \geq \sqrt{x^2 + y^2} \; ,$$

wobei x und y die Koordinaten des relevanten Umgebungselements im prognostizierten Sensorkoordinatensystem sind. Zum anderen muss gelten:

$$\alpha_{Start} < \arctan(y : x) \leq \alpha_{Ende}.$$

Ist eine dieser beiden Bedingungen nicht erfüllt, so befindet sich das relevante Umgebungselement 14 außerhalb des Erfassungsbereichs und das Verfahren wird mit Schritt S8 fortgesetzt, in dem, da das Punkterfassungsbereichskriterium nicht erfüllt ist, der in Schritt S5 ausgewählte Trajektorienpunkt 6 der in Schritt S4 ausgewählten Trajektorie 2, 3, 4, 5 durch Setzen eines Flags markiert wird.

Wurden in Schritt S7 beide Bedingungen erfüllt oder ist die Markierung in Schritt S8 erfolgt, so wird in Schritt S9 überprüft, ob bereits alle Trajektorienpunkte 6 der in Schritt S4 ausgewählten Trajektorie 2, 3, 4, 5 abgearbeitet wurden. Ist dies nicht der Fall, so wird das Verfahren mit Schritt S5 fortgesetzt und es wird ein weiterer Trajektorienpunkt 6 der in Schritt S4 gewählten Trajektorie 2, 3, 4, 5 ausgewählt.

Wurde in Schritt S9 ermittelt, dass alle Trajektorienpunkte 6 einer Trajektorie 2, 3, 4, 5 abgearbeitet wurden, so wird in Schritt S10 für diese Trajektorie 2, 3, 4, 5 ermittelt, ob das Erfassungsbereichskriterium erfüllt ist. Das Erfassungsbereichskriterium ist für eine Trajektorie 2, 3, 4, 5 genau dann erfüllt, wenn alle Punkterfassungsbereichskriterien erfüllt sind, das heißt, wenn keiner der Trajektorienpunkte 6 in Schritt S8 durch das Setzen eines Flags markiert wurde.

In einer alternativen Ausführungsform könnte es zum Erfüllen des Erfassungsbereichskriteriums ausreichend sein, wenn für eine vorgegebene Anzahl oder einen vorgegebenen Anteil der Trajektorienpunkte 6 jeweils das Punkterfassungsbereichskriterium erfüllt ist.

Ist das Erfassungsbereichskriterium nicht erfüllt, so wird die in Schritt S4 ausgewählte Trajektorie 2, 3, 4, 5 durch Setzen eines Trajektorienflags markiert, um anzuzeigen, dass für diese Trajektorie 2, 3, 4, 5 das Erfassungsbereichskriterium nicht erfüllt wurde. Anschließend wird in Schritt S12 überprüft, ob bereits alle in Schritt S2 bestimmten Trajektorien 2, 3, 4, 5 abgearbeitet wurden.

Falls dies nicht der Fall ist, wird das Verfahren in Schritt S4 fortgesetzt und es wird eine weitere der bestimmten Trajektorien 2, 3, 4, 5 gewählt. Wurden bereits alle bestimmten Trajektorien 2, 3, 4, 5 daraufhin überprüft, ob für sie jeweils das Erfassungsbereichskriterium erfüllt ist, so wird das Verfahren in Schritt S13 fortgesetzt, indem eine der Trajektorien 2, 3, 4, 5, für die das Trajektorienflag in Schritt S11 nicht gesetzt wurde, also für die das Erfassungsbereichskriterium erfüllt ist, in Abhängigkeit weiterer Bewertungskriterien als die Solltrajektorie ausgewählt wird. Eine Auswahl einer aus mehreren Trajektorien 2, 3, 4, 5 als die zu nutzende Solltrajektorie in Verfahren zur automatisierten Führung eines Kraftfahrzeugs ist grundsätzlich im Stand der Technik bekannt und soll nicht näher erläutert werden.

Die ausgewählte Solltrajektorie wird anschließend in Schritt S14 durch Ansteuern von Fahrzeugsystemen zur Bewegung des Kraftfahrzeugs entlang der Solltrajektorie ausgeführt.

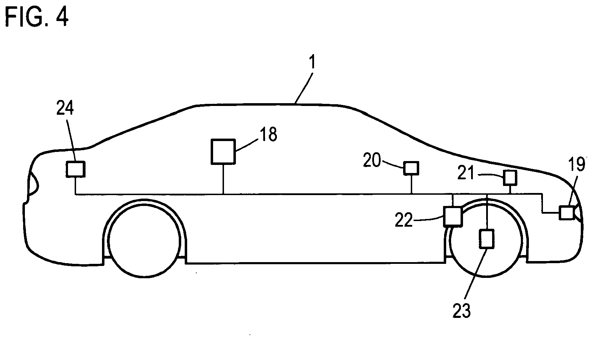

Fig. 4 zeigt ein Kraftfahrzeug 1, das zur Durchführung des obig erläuterten Verfahrens ausgebildet ist. Das Kraftfahrzeug umfasst ein Fahrerassistenzsystem 18 zur automatisierten Führung des Kraftfahrzeugs 1. Durch den Umfeldsensor 19 werden das Umfeld des Kraftfahrzeugs betreffende Umfelddaten erfasst. Zugleich werden mit zahlreichen nicht gezeigten Sensoren sowie mit dem GPS-Empfänger 24 in Verbindung mit dem Navigationssystem 20 Egodaten des Kraftfahrzeugs erfasst, die den Fahrzeugzustand und insbesondere die Position des Kraftfahrzeugs beschreiben.

Eine automatisierte Führung des Kraftfahrzeugs 1 durch das Fahrerassistenzsystem 18 ist möglich, indem das Fahrerassistenzsystem 18 diverse Fahrzeugsysteme, insbesondere den Motor 21, die Bremsen 22 sowie die Lenkung 23, ansteuert, um das Kraftfahrzeug auf einer durch das Fahrerassistenzsystem 18 bestimmten Solltrajektorie führen. Hierzu werden, wie bereits erläutert, mehrere Trajektorien, die jeweils eine mögliche zukünftige Bewegung des Kraftfahrzeugs beschreiben, in Abhängigkeit der Umfeld- und der Egodaten, bestimmt. Aus diesen wird eine der bestimmten Trajektorien als Solltrajektorie zur Führung des Kraftfahrzeugs ausgewählt, wobei der Erfassungsbereich des Umfeldsensors 19 bei der Auswahl der Solltrajektorie berücksichtigt wird.

**Patentansprüche**

1. Verfahren zum Betrieb eines Fahrerassistenzsystems (18) zur automatisierten Führung eines Kraftfahrzeugs (1), umfassend die Schritte:

   - Erfassen von das Umfeld des Kraftfahrzeugs (1) betreffenden Umfelddaten durch Umfeldsensoren (19) des Kraftfahrzeugs (1) und von das Kraftfahrzeug (1) betreffenden Egodaten,
   - Bestimmen mehrerer Trajektorien (2-5), die jeweils eine mögliche zukünftige Bewegung des Kraftfahrzeugs (1) beschreiben, in Abhängigkeit der Umfelddaten und der Egodaten,
   - Auswählen einer Solltrajektorie aus den bestimmten Trajektorien (2-5) durch Auswertung von mehreren Bewertungskriterien, wobei wenigstens eines der Bewertungskriterien ein Erfassungsbereichskriterium ist, das wenigstens einen prognostizierten Erfassungsbereich (15) eines der Umfeldsensoren (19) oder einer Gruppe der Umfeldsensoren (19) des Kraftfahrzeugs (1) während einer prognostizierten Bewegung des Kraftfahrzeugs (1) entlang der jeweiligen bestimmten Trajektorie (2-5) auswertet,
   - Ansteuern von Fahrzeugsystemen zur Bewegung des Kraftfahrzeugs (1) entlang der Solltrajektorie.

2. Verfahren nach Anspruch 1,
   **dadurch gekennzeichnet,**
   **dass** vor Auswahl der Solltrajektorie wenigstens ein relevantes Umgebungselement (14) in der Umgebung des Kraftfahrzeugs (1) ermittelt wird, wobei das Erfassungskriterium dahingehend ausgewertet wird, inwieweit sich das relevante Umgebungselement (14) während der jeweiligen prognostizierten Bewegung im prognostizierten Erfassungsbereich (15) befindet.

3. Verfahren nach Anspruch 2,
   **dadurch gekennzeichnet,**
   **dass** die bestimmten Trajektorien (2-5) jeweils mehrere zeitlich beabstandete Trajektorienpunkte (6) umfassen, wobei für jeden der Trajektorienpunkte (6) jeder der bestimmten Trajektorien (2-5) ein Punkterfassungsbereichskriterium bestimmt wird, wobei für jeden der Trajektorienpunkte (6) ein prognostizierter Erfassungsbereich (15) ermittelt wird, und wobei das Punkterfassungsbereichskriterium jeweils erfüllt wird, wenn sich das relevante Umgebungselement (14) zumindest teilweise in dem jeweiligen prognostizierten Erfassungsbereich (15) befindet.

4. Verfahren nach Anspruch 3,
   **dadurch gekennzeichnet,**
   **dass** das Erfassungsbereichskriteriums erfüllt wird, wenn der Anteil und/oder die Anzahl der Trajektorienpunkte (6) der jeweiligen bestimmten Trajektorie (2-5), für die das Punkterfassungsbereichskriterium erfüllt wird, einen vorgegebenen Wert übersteigt oder erreicht.

5. Verfahren nach Anspruch 4,
   **dadurch gekennzeichnet,**
   **dass** eine der bestimmten Trajektorien (2-5) als Solltrajektorie ausgewählt wird, für die das Erfassungsbereichskriteriums erfüllt wird.

6. Verfahren nach Anspruch 1 oder 2,
   **dadurch gekennzeichnet,**
   **dass** die bestimmten Trajektorien (2-5) jeweils mehrere zeitlich beabstandete Trajektorienpunkte (6) umfassen, wobei für jeden der Trajektorienpunkte (6) für wenigstens eines der Bewertungskriterien jeweils ein Punktbewertungskriterium ausgewertet wird, um eine Punktbewertung zu bestimmen, wobei das Bewertungskriterium die den Trajektorienpunkten (6) der jeweiligen bestimmten Trajektorie (2-5) zugeordneten Punktbewertungskriterien auswertet.

7. Kraftfahrzeug mit einem Fahrerassistenzsystem (18) zur automatisierten Führung des Kraftfahrzeugs (1),
   **dadurch gekennzeichnet,**
   **dass** das Kraftfahrzeug (1) zur Durchführung des Verfahrens nach einem der vorangehenden Ansprüche ausgebildet ist.

**Claims**

1. Method for operating a driver assistance system (18) for the automated guidance of a motor vehicle (1), comprising the steps:

   - detecting environmental data relating to surroundings of the motor vehicle (1) by environmental sensors (19) of the motor vehicle (1) and ego data relating to the motor vehicle (1),
   - determining several trajectories (2-5) that respectively describe a possible future movement of the motor vehicle (1) depending on the environmental data and the ego data,

- selecting a reference trajectory from the determined trajectories (2-5) by evaluating several evaluation criteria, wherein at least one of the evaluation criteria is a detection range criterion that analyses at least one predicted detection range (15) of one of the environmental sensors (19) or a group of environmental sensors (19) of the motor vehicle (1) during a predicted movement of the motor vehicle (1) along the respective determined trajectory (2-5),

- controlling vehicle systems in order to move the motor vehicle (1) along the reference trajectory.

2. Method according to claim 1,
**characterised in that**
at least one relevant environmental element (14) in the surroundings of the motor vehicle (1) is determined prior to selecting the reference trajectory, wherein the detection criterion is evaluated as to what extent the relevant environmental element (14) is located within the predicted detection range (15) during the respective predicted movement.

3. Method according to claim 2,
**characterised in that**
the determined trajectories (2-5) each include several trajectory points (6) that are temporally spaced apart, wherein a point detection range criterion is determined for each of the trajectory points (6) of each of the determined trajectories (2-5), wherein a predicted detection range (15) is determined for each of the trajectory points (6), and wherein the point detection range criterion is fulfilled respectively if the relevant environmental element (14) is located at least partially in the respective predicted detection range (15).

4. Method according to claim 3,
**characterised in that**
the detection range criterion is fulfilled if the proportion and/or the number of trajectory points (6) of the respectively determined trajectory (2-5), for which the point detection range criterion is fulfilled, exceeds or reaches a specified value.

5. Method according to claim 4,
**characterised in that**
one of the determined trajectories (2-5) is selected as reference trajectory, for which the detection range criterion is fulfilled.

6. Method according to claim 1 or 2,
**characterised in that**
the determined trajectories (2-5) respectively include several trajectory points (6) that are temporally spaced apart, wherein a point evaluation criterion is evaluated respectively for each of the trajectory points (6) for at least one of the evaluation criteria in order to determine a point evaluation, wherein the evaluation criterion evaluates the point evaluation criteria associated with the trajectory points (6) of the respectively determined trajectory (2-5).

7. Motor vehicle comprising a driver assistance system (18) for the automated guidance of the motor vehicle (1),
**characterised in that** the motor vehicle (1) is designed to perform the method according to any of the preceding claims.

**Revendications**

1. Procédé de fonctionnement d'un système d'assistance au conducteur (18) pour la gestion automatisée d'un véhicule automobile (1), comprenant les étapes consistant à :

- saisir des données environnementales concernant l'environnement du véhicule automobile (1) par des capteurs environnementaux (19) et des données propres concernant le véhicule automobile (1),
- déterminer plusieurs trajectoires (2-5) qui décrivent respectivement un déplacement futur possible du véhicule automobile (1) en fonction des données environnementales et des données propres,
- sélectionner une trajectoire théorique parmi les trajectoires déterminées (2-5) par interprétation de plusieurs critères d'évaluation, dans lequel au moins l'un des critères d'évaluation est un critère de zone de saisie qui évalue au moins une zone de saisie prédite (15) d'un des capteurs environnementaux (19) ou d'un groupe des capteurs environnementaux (19) du véhicule automobile (1) au cours d'un déplacement prédit du véhicule automobile (1) le long d'une trajectoire déterminée respective (2-5),
- commander des systèmes du véhicule pour déplacer le véhicule automobile (1) le long de la trajectoire théorique.

2. Procédé selon la revendication 1,
**caractérisé en ce que** :

avant la sélection de la trajectoire théorique, au moins un élément environnemental pertinent (14) est déterminé dans l'environnement du véhicule automobile (1), dans lequel le critère d'évaluation est évalué pour savoir dans quelle mesure l'élément environnemental pertinent (14) se trouve dans la zone de saisie prédite (15) au cours du déplacement prédit respectif.

**3.** Procédé selon la revendication 2, **caractérisé en ce que** :

les trajectoires déterminée (2-5) comprennent respectivement plusieurs points de trajectoire espacés dans le temps (6), dans lequel on détermine pour chacun des points de trajectoire (6) de chacune des trajectoires déterminées (2-5) un critère de zone de saisie de points, dans lequel on détermine pour chacun des points de trajectoire (6) une zone de saisie prédite (15) et dans lequel le critère de zone de saisie de points est respectivement satisfait lorsque l'élément environnement pertinent (14) se trouve au moins en partie dans la zone de saisie prédite respective (15).

**4.** Procédé selon la revendication 3, **caractérisé en ce que** :

le critère de zone de saisie est satisfait lorsque la fraction et/ou le nombre des points de trajectoire (6) de la trajectoire déterminée respective (2-5), pour lesquels le critère de zone de saisie de points est satisfait, dépasse(nt) ou atteint (atteignent) une valeur prédéterminée.

**5.** Procédé selon la revendication 4, **caractérisé en ce que** :

l'une des trajectoires déterminées (2-5) est sélectionnée comme trajectoire théorique pour laquelle le critère de zone de saisie est satisfait.

**6.** Procédé selon la revendication 1 ou 2, **caractérisé en ce que** :

les trajectoires déterminées (2-5) comprennent respectivement plusieurs points de trajectoire espacés dans le temps (6), dans lequel, pour chacun des points de trajectoire (6), on évalue pour au moins l'un des critères d'évaluation, respectivement un critère d'évaluation de points pour déterminer une évaluation des points, dans lequel le critère d'évaluation interprète les critères d'évaluation de points affectés aux points de trajectoire (6) de la trajectoire déterminée respective (2-5).

**7.** Véhicule automobile pourvu d'un système d'assistance au conducteur (18) pour la gestion automatisée du véhicule automobile (1), **caractérisé en ce que** :

le véhicule automobile (1) est conçu pour réaliser le procédé selon l'une quelconque des revendications précédentes.

FIG. 1

```
        ┌──────────┐
        │          │──── S1
        └────┬─────┘
             │
             ▼
        ┌──────────┐
        │          │──── S2
        └────┬─────┘
             │
             ▼
        ┌──────────┐
        │          │──── S3
        └────┬─────┘
             │
             ▼
        ┌──────────┐
    ──▶ │          │──── S4
        └────┬─────┘
             │
             ▼
        ┌──────────┐
        │          │──── S5
        └────┬─────┘
             │
             ▼
        ┌──────────┐
        │          │──── S6
        └────┬─────┘
             │
             ▼
      S7 ───◇           nein
          ◇    ◇──────────────┐
           ◇  ◇               │
             │            ┌───────────┐
            ja            │           │── S8
             │            └───────────┘
             ◀────────────────┘
             ▼
   nein   ◇─────
       ◀──◇     ◇──── S9
          ◇   ◇
             │
             ▼
  S10 ───◇            nein
        ◇    ◇──────────────┐
         ◇  ◇               │
           │            ┌───────────┐
          ja            │           │── S11
           │            └───────────┘
           ◀────────────────┘
           ▼
  nein  ◇────
     ◀──◇    ◇──── S12
        ◇  ◇
           │
          ja
           ▼
        ┌──────────┐
        │          │──── S13
        └────┬─────┘
             │
             ▼
        ┌──────────┐
        │          │──── S14
        └──────────┘
```

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008031662 A1
- DE 102011002911 A1
- DE 102012007127 A1
- US 20080065328 A1